# EUROPÄISCHE PATENTSCHRIFT

(11) **EP 0 932 786 B1**
(45) Veröffentlichungstag und Bekanntmachung des Hinweises auf die Patenterteilung: **03.04.2002**
(21) Anmeldenummer: 97948707.1
(22) Anmeldetag: 24.10.1997
(51) Int. Cl.: F16L 13/16

(54) **ROHRVERBINDUNG**
PIPE COUPLING
RACCORD DE TUYAUTERIE

(30) Priorität: 25.10.1996 DE 19645151
(43) Veröffentlichungstag der Anmeldung: 04.08.1999
(73) Patentinhaber: Mapress GmbH & Co. KG, 40764 Langenfeld (DE)
(72) Erfinder: FOERING, Herbert, D-42697 Solingen (DE); GIGOWSKI, Thomas, D-41517 Grevenbroich (DE); BERANE, Michael, D-40764 Langenfeld (DE); HARTINGS, Karl-Heinz, D-40764 Langenfeld (DE); SCHURR, Johannes, D-53227 Bonn (DE)
(74) Vertreter: Meissner, Peter E., Dipl.-Ing.
(86) Internationale Anmeldenummer: DE9702555
(87) Internationale Veröffentlichungsnummer: WO9819093

(56) Entgegenhaltungen:
- EP-A- 0 695 901
- FR-A- 2 398 955
- GB-A- 2 090 932
- US-A- 3 632 141

## Beschreibung

Die Erfindung betrifft eine Rohrverbindung mit einem Fitting und mit einem zylindrischen Rohr, dessen glattendiger Endenabschnitt in den Fitting einschiebbar und mit diesem verpreßbar ist, gemäß dem Oberbegriff des Patentanspruches 1.

Rohrpreßverbindungen werden von verschiedenen Herstellern angeboten (Mannesmann, Seppelfricke, Viegener usw.). Den von diesen Herstellern angebotenen Systemen ist gemeinsam, daß zwischen dem eingeschobenen Rohrende und dem Außenfitting ein Dichtring angeordnet ist. Dafür weist der Fitting einen oder auch zwei (Firma Seppelfricke) nach außen sich erstreckende Wülste auf, in denen der Dichtring angeordnet ist. Bei der Verpressung werden dieser Wulstbereich und ein benachbarter zylindrischer Bereich gleichzeitig verpreßt. Darüber hinaus gibt es die von anderen Herstellern angebotenen Systeme, die mit einem Innenfitting arbeiten (Fränkische Rohrwerke, Geberit, Roth, Unipipe usw.). Der größte Teil dieser genannten Hersteller verwendet als Rohr ein Verbundrohr. Bei diesem Verbundrohr handelt es sich um ein sogenanntes Dreischichtenrohr, bei denen zwischen einem dickwandigen Innenrohr aus PE und einem dickwandigen äußeren Hüllabschnitt aus PE-HD ein eine Diffusionssperre bildendes längsnahtgeschweißtes Aluminiumrohr angeordnet ist. Bei einigen Herstellern, die Verbundrohre verwenden, erfolgt die Verpressung mittels einer außen über das Verbundrohr geschobenen Verpreßhülse (z. B. Fränkische Rohrwerke, Unipipe). Die Firma Roth dagegen setzt ein Kunststoffrohr ein, wobei die Abstützung durch einen in das Kunststoffrohr einschiebbaren Stützkörper erfolgt.

Nachteilig bei allen Lösungen mit einem Innenfitting ist die Verminderung des Leitungsquerschnittes. Zusätzlich entstehen an den unstetigen Übergängen zwischen Innenfitting und Rohr in der Strömung Wirbel, die den Strömungswiderstand entsprechend erhöhen. Nachteilig bei allen Lösungen mit einem Außenfitting ist, daß nach dem Einschieben des Rohres in den Fitting von außen nicht mehr zu erkennen ist, ob die vorgeschriebene Einstecktiefe für das Rohr erreicht worden ist.

Eine Rohrverbindung ist in der DE 43 29 442 A1 offenbart. Diese Rohrverbindung weist eine den Fitting bildende langgestreckte Metallhülse auf, in die die beiden zu verbindenden Rohre mit gleichem Durchmesser geschoben werden. Die Metallhülse, die einen etwas größeren Durchmesser als die Rohre aufweist, ist in den Randbereichen derart umgebördelt, daß die Hülsenränder lückenlos an den Rohrwänden anliegen. Der Raum zwischen Hülse und den Rohrwänden ist durch eine in die Hülse fest eingelegte Gummimanschette ausgefüllt. Nach dem Einschieben der Rohre werden in die Hülsenwand Sicken eingepreßt mit einem derartigen Druck, daß sich jeweils in den Rohrwänden deckungsgleiche Sicken bilden. Nachteilig bei diesem System ist, daß die breite Preßbacke viel Platz beansprucht, so daß die Verpressung in engen Bereichen unmöglich wird. Außerdem wird für den größten Teil der Fittings, insbesondere bei T-Stücken, eine Verlängerung benötigt, damit die Preßzange angesetzt werden kann. Die zuvor schon erläuterte Problematik bei Systemen mit einem Außenfitting, d. h. das Nichterkennen der korrekten Einstecktiefe ist auch für dieses System zutreffend.

In der gattungsgemäßen FR 2398955 Fig. 6 ist eine Rohrpreßverbindung offenbart, bei der im Verpreßbereich zwischen der Außenwand eines glattendigen Rohres und der Innenwand des aufgeweiteten Endbereiches eines zu verbindenden Rohres eine Metallhülse angeordnet ist, die ein langgestrecktes Dichtelement in Form einer Muffe durchsetzt. Die Metallhülse weist an einem Ende einen Kragen auf, der vorzugsweise über Schweißen mit der Stimseite des glattendigen Rohres verbunden ist. Diese bekannte Konstruktion hat den Nachteil, daß sie nur für große Pipeline-Rohre geeignet ist und eine Aufweitung des Endbereiches des zu verbindenden Rohres erforderlich ist. Die Fixierung der Metallhülse an der Stimseite des glattendigen Rohres durch Schweißen widerspricht zudem der Verpreßtechnik, die entwickelt worden ist, um auf Schweißen oder Löten verzichten zu können.

Aufgabe der Erfindung ist es, eine Rohrverbindung mit einem Außenfitting anzugeben, bei der die erforderliche Einstecktiefe bzw. die erforderliche Überdeckung zwischen Rohr und Fitting nach dem Einschieben bzw. Aufschieben erkennbar ist. Eine weitergehende Aufgabe besteht darin, den Außenfitting konstruktiv so zu gestalten, daß er in der Herstellung kostengünstiger ist als die bisher bekannten Lösungen.

Diese Aufgabe wird mit den im kennzeichnenden Teil des Patentanspruches 1 angegebenen Merkmalen gelöst. Vorteilhafte Weiterbildungen sind Bestandteil von Unteransprüchen.

Statt der Dichtmanschette wird eine Metallhülse zwischen Rohraußenwand und Fittinginnenwand angeordnet, wobei der Dichtring im Querschnitt gesehen hälftig von der Metallhülse durchsetzt wird. Vorzugsweise ist in beiden Endbereichen der Metallhülse je ein Dichtring angeordnet. Vergleichbar wie bei der Dichtmanschette entspricht die Länge der Metallhülse der erforderlichen Überdeckung zwischen Rohr und Fitting. Auch die Metallhülse weist zur visuellen Erkennbarkeit der erforderlichen Überdeckung zwei von außen visuell unterscheidbare Abschnitte auf, dessen erster von der Rohrstirnseite her sich erstreckender Abschnitt der erforderlichen Überdeckung zwischen Rohr und Fitting entspricht und daran sich ein kürzerer Kontrollabschnitt anschließt. Vorzugsweise sind die beiden Abschnitte farblich unterschiedlich. Alternativ kann man die exakte Positionierung der Metallhülse auch dadurch sicherstellen, indem die Metallhülse an einem Ende einen radial nach innen sich erstreckenden die Rohrstirnseite abdeckenden Anschlag aufweist. Zusätzlich kann auch an dem der Rohrstirnseite abgewandten Ende ein radial nach außen die Fittingstirnseite abdeckender Anschlag vorgesehen sein. Damit die Metallhülse nach dem Aufschieben nicht verrutscht, ist mindestens ein radial nach innen gerichtetes Spreizelement vorgesehen. Um das Aufschieben des Fittings bzw. das Einschieben des Rohrendes zusammen mit der zuvor aufgeschobenen Metallhülse in den Fitting zu erleichtern, wird vorgeschlagen, den Fitting mit einer leichten Konizität auf der Innenseite zu versehen und zwar so, daß die Konizität von der Stirnseite her gesehen abnimmt.

Fitting und / oder Rohr können in C-Stahl, Edelstahl, Titan, Aluminium, Messing, Kunststoff oder Verbundwerkstoffen hergestellt werden.

Zusammenfassend sind die Hauptvorteile der vorgeschlagenen Rohrverbindung zusammengestellt.
- Von außen kontrollierbare erforderliche Überdeckung zwischen Rohr und Fitting
- Keine Einschränkung des Leitungsquerschnittes
- Kleine Baugröße der Fittings
- Ausgleich der Fertigungstoleranzen bei Anwendung der Z-Maß-Methode zur Vormontage
- Geringerer Kraftbedarf der Verpreßzange
- Mehrebenenverpressung ist möglich
- Einfachere Herstellung des Fittings
- Geringerer Herstellaufwand

In der Zeichnung wird anhand dreier Ausführungsbeispiele die erfindungsgemäße Rohrverbindung näher erläutert.

Es zeigen:
- Figur 1: im halbseitigen Längsschnitt ein erstes Ausführungsbeispiel der erfindungsgemäß ausgebildeten Rohrverbindung
- Figur 2: eine Variante der Ausführung gemäß Figur 1
- Figur 3: ein zweites Ausführungsbeispiel

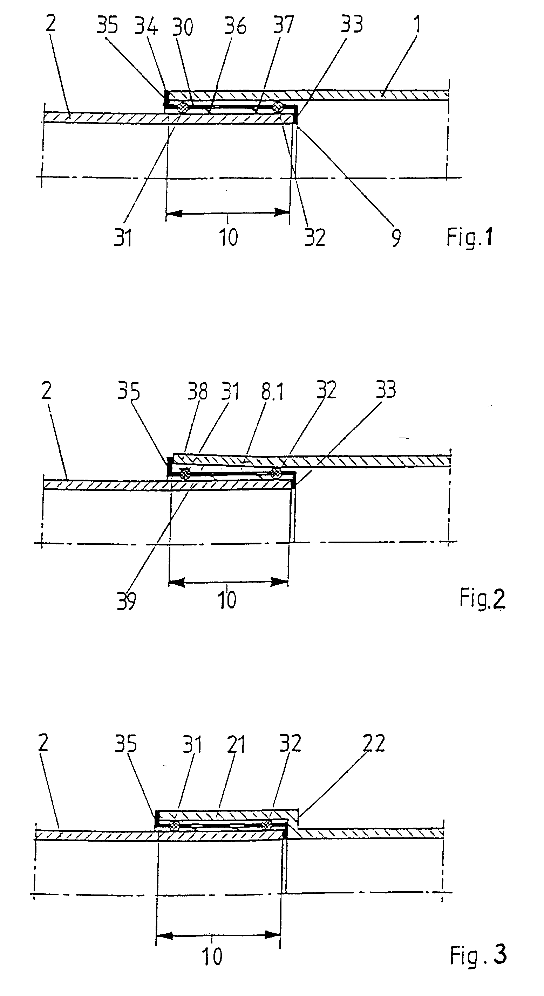

In Figur 1 ist in einem halbseitigen Längsschnitt ein erstes Ausführungsbeispiel der erfindungsgemäß ausgebildeten Rohrverbindung dargestellt. Statt einer Dichtmanschette ist zwischen Rohr 2 und Fitting 1 eine Metallhülse 30 angeordnet. In diesem Ausführungsbeispiel ist die Metallhülse 30 in beiden Endbereichen mit je einem Dichtring 31, 32 versehen. Damit die Dichtung wirksam werden kann, werden beide Dichtringe 31, 32 im Querschnitt gesehen von der Metallhülse 30 durchsetzt. Weiterhin weist die Metallhülse 30 in diesem Ausführungsbeispiel einen radial nach innen die Rohrstimseite 9 abdeckenden Anschlag 33 auf. Dieser Anschlag gewährleistet beim Aufschieben der Metallhülse 30 auf den Endenbereich des Rohres 2 eine exakte Positionierung. Um die erforderliche Überdeckung zu gewährleisten, ist auch am anderen Ende der Metallhülse ein radial nach außen sich erstreckender die Fittingseite 34 abdeckender Anschlag 35 vorgesehen. Die Möglichkeit eines Verrutschens der Metallhülse 30 nach dem Aufschieben wird durch wenigstens ein radial nach innen sich erstreckendes Spreizelement 36 verhindert. In diesem Ausführungsbeispiel sind zwei Spreizelemente 36, 37 vorgesehen. Diese graben sich beim Versuch des Zurückschiebens der Metallhülse 30 in die äußere Mantelfläche des Rohres 2 ein.

Figur 2 zeigt eine Variante des in Figur 1 dargestellten Ausführungsbeispieles. Um das Aufschieben des Fittings 38 auf die Metallhülse 30 bzw. das Einschieben des Endenbereiches des Rohres 2 zusammen mit der zuvor aufgeschobenen Metallhülse 30 in den Fitting 38 zu erleichtern, weist die Innenseite 39 des Fittings 38 eine leichte Konizität auf.

Figur 3 zeigt ein zweites Ausführungsbeispiel, bei dem der Fitting 21 selbst einen radial nach innen sich erstreckenden Absatz 22 aufweist, der dann als Anschlag für das zusammen mit der Metallhülse 30 (Fig. 1) einzuschiebende Rohr 2 dient. Diese Ausführung hat zudem den Vorteil, daß bei entsprechender Auslegung der radialen Erstreckung des Anschlages 33 (Fig. 2) der Metallhülse 30 (Fig. 1) als auch des Absatzes 22 des Fittings 21 ein keine Unstetigkeit aufweisender freier Durchgang gebildet wird.

## Patentansprüche

1. Rohrverbindung mit einem Fitting und mit einem zylindrischen Rohr, dessen glattendiger Endabschnitt in den Fitting einschiebbar ist, der mindestens einen in Längsrichtung sich erstreckenden hülsenartigen Bereich aufweist und bei der zwischen Rohraußenwand und Fittinginnenwand mindestens eine mit einem Dichtelement versehene Metallhülse angeordnet ist und Fitting und Rohr mittels eines außen angesetzten mindestens in einer Radialebene den hülsenartigen Bereich des Fittings, sowie des darunterliegenden Rohrabschnittes plastisch verformenden Preßwerkzeuges, unlösbar miteinander verbunden ist, wobei die festgelegte axiale Erstreckung der Metallhülse das Rohr von der Rohrstirnseite her umschließt und die Länge der Metallhülse so gewählt ist, daß sie der erforderlichen Überdeckung zwischen Rohr und Fitting entspricht und diese dann gegeben ist, wenn nach dem Aufschieben des Fittings auf die Metallhülse oder nach dem Einschieben des Rohres zusammen mit der zuvor aufgeschobenen Metallhülse in den Fitting die dem Rohr zugewandte Stirnseite des Fittings genau mit dem Ende der Metallhülse zusammenfällt,
**dadurch gekennzeichnet,**
**daß** die Metallhülse (30) mindestens ein radial nach innen sich erstreckendes Spreizelement (36,37) aufweist und das Dichtelement als Dichtring (31,32) ausgebildet im Querschnitt gesehen von der Metallhülse (30) durchsetzt ist.

2. Rohrverbindung nach Anspruch 1,
**dadurch gekennzeichnet,**
**daß** in beiden Endbereichen der Metallhülse (30) je ein Dichtring (31, 32) vorgesehen ist.

3. Rohrverbindung nach den Ansprüchen 1 und 2,
**dadurch gekennzeichnet,**
**daß** die Metallhülse (30) an einem Ende einen radial nach innen sich erstreckenden, die Rohrstirnseite (9) abdeckenden Anschlag (33) aufweist.

4. Rohrverbindung nach einem der Ansprüche 1-3,
**dadurch gekennzeichnet,**
**daß** die Metallhülse (30) an dem von der Rohrstirnseite (9) abgewandten Ende einen radial nach außen die Fittingstirnseite (34) abdeckenden Anschlag (35) aufweist.

5. Rohrverbindung nach den Ansprüchen 1-4,
**dadurch gekennzeichnet,**
**daß** die Metallhülse (30) zwei von außen visuell unterscheidbare Abschnitte aufweist, dessen erster von der Rohrstirnseite (9) her sich erstreckende Abschnitt der erforderlichen Überdeckung zwischen Rohr (2) und Fitting (1) entspricht und daran sich ein kürzerer Kontrollabschnitt anschließt.

6. Rohrverbindung nach Anspruch 5,
**dadurch gekennzeichnet,**
**daß** die beiden Abschnitte der Metallhülse (30) farblich unterschiedlich sind.

7. Rohrverbindung nach einem der Ansprüche 1-6,
**dadurch gekennzeichnet,**
**daß** der Innendurchmesser des Fittings (38) von der Stirnseite her gesehen eine abnehmende Konizität aufweist.

## Claims

1. Pipe coupling with a fitting and with a cylindrical tube whose smooth end section can be inserted into the fitting, which comprises at least one casing-like area extending in the longitudinal direction and in which at least one metallic sleeve provided with a sealing element is arranged between the outer wall of the tube and the inner wall of the fitting, and the fitting and the tube are undetachably connected to one another by means of a pressing tool positioned on the outside which produces plastic deformation at least in a radial plane of the casing-like area of the fitting and of the tube section under it, such that the fixed axial extension of the metallic sleeve encloses the tube from the tube end side thereof and the length of the metal sleeve is chosen such that it corresponds to the necessary overlap between the tube and the fitting and this overlap is established when, after the fitting has been pushed onto the metallic sleeve or after the tube has been inserted with the metallic sleeve previously pushed onto it into the fitting, the end face of the fitting facing the tube coincides exactly with the end of the metallic sleeve,
**characterised in that**
the metallic sleeve (30) comprises at least one expansion element (36, 37) extending inwards and the metallic sleeve (30) passes through the sealing element formed as a sealing ring (31, 32) when viewed in cross-section.

2. Pipe coupling according to Claim 1,
**characterised in that**
a sealing ring (31, 32) is provided in each end area of the metallic sleeve (30).

3. Pipe coupling according to Claims 1 and 2,
**characterised in that**
at one end the metallic sleeve (30) has an abutment (33) extending radially inwards, which covers the end (9) of the tube.

4. Pipe coupling according to any of Claims 1 to 3,
**characterised in that**
at its end facing away from the end face (9) of the tube, the metallic sleeve (30) has an abutment (35) extending radially outwards, which covers the end (34) of the fitting.

5. Pipe coupling according to any of Claims 1 to 4,
**characterised in that**
the metallic sleeve (30) has two sections visually distinct from one another, the first of which, extending from the end (9) of the tube, corresponds to the necessary overlap between the tube (2) and the fitting (1), a shorter control section being connected to that section.

6. Pipe coupling according to Claim 5,
**characterised in that**
the two sections of the metallic sleeve (30) have different colours.

7. Pipe coupling according to any of Claims 1 to 6,
**characterised in that**
viewed from its end, the inside diameter of the fitting (38) has a conically reducing taper.

## Revendications

1. Liaison pour tube, comportant un raccord et un tube cylindrique, dont le tronçon d'extrémité lisse peut être introduit dans le raccord, qui présente au moins une zone, du type manchon, s'étendant dans la direction longitudinale, et dans laquelle, entre la paroi externe du tube et la paroi interne du raccord, il est agencé au moins un manchon métallique muni d'un élément d'étanchéité et le raccord et le tube sont reliés ensemble de façon inamovible au moyen d'un outil de pressage agencé extérieurement, déformant plastiquement au moins dans un plan radial la zone du type manchon du raccord, ainsi que le tronçon de tube sous-jacent, l'extension axiale fixée du manchon métallique entourant le tube du côté frontal du tube et la longueur du manchon métallique étant choisie de sorte qu'elle correspond au recouvrement nécessaire entre le tube et le raccord et ceci est fourni lorsque, après la mise en place du raccord sur le manchon métallique ou après l'introduction du tube en même temps que le manchon métallique précédemment mis en place dans le raccord, la face frontale, en regard du tube, du raccord coïncide précisément avec l'extrémité du manchon métallique,
**caractérisée en ce que** le manchon métallique (30) présente au moins un élément d'écartement (36, 37) s'étendant radialement vers l'intérieur et l'élément d'étanchéité réalisé comme bague d'étanchéité (31, 32) en section transversale est traversé par le manchon métallique (30).

2. Liaison pour tube selon la revendication 1,
**caractérisée en ce que**, aux deux zones d'extrémité du manchon métallique (30), il est à chaque fois prévu une bague d'étanchéité (31, 32).

3. Liaison pour tube selon les revendications 1 et 2,
**caractérisée en ce que** le manchon métallique (30) présente, à une extrémité, une butée (33) s'étendant radialement vers l'intérieur, recouvrant la face frontale (9) du tube.

4. Liaison pour tube selon une des revendications 1 - 3,
**caractérisée en ce que** le manchon métallique (30) présente, à l'extrémité opposée à la face frontale (9) du tube, une butée (35) recouvrant radialement vers l'extérieur la face frontale (34) du raccord.

5. Liaison pour tube selon les revendications 1 - 4,
**caractérisée en ce que** le manchon métallique (30) présente deux tronçons pouvant être visuellement différenciés de l'extérieur, dont le premier tronçon s'étendant à partir de la face frontale (9) du tube correspond au recouvrement nécessaire entre le tube (2) et le raccord (1), et il s'y raccorde un tronçon de contrôle plus court.

6. Liaison pour tube selon la revendication 5,
**caractérisée en ce que** les deux tronçons du manchon métallique (30) sont colorés différemment.

7. Liaison pour tube selon une des revendications 1 - 6,
**caractérisée en ce que** le diamètre interne du raccord (38) présente, à partir de la face frontale, une conicité décroissante.
